# FASCICULE DE BREVET EUROPEEN

(11) **EP 4 532 246 B1**
(45) Date de publication et mention de la délivrance du brevet: **29.04.2026**
(21) Numéro de dépôt: 23719437.8
(22) Date de dépôt: 28.03.2023
(51) Int. Cl.: B60L 3/00, B60L 3/12

(54) **PROCÉDÉ DE SURVEILLANCE D'UN COUPLE MOTEUR D'UNE MACHINE ÉLECTRIQUE DE TRACTION**
VERFAHREN ZUR ÜBERWACHUNG EINES ANTRIEBSMOMENTS EINER ELEKTRISCHEN ZUGMASCHINE
METHOD FOR MONITORING A DRIVING TORQUE OF AN ELECTRIC TRACTION MACHINE

(30) Priorité: 24.05.2022 FR 2204959
(43) Date de publication de la demande: 09.04.2025
(73) Titulaire: Stellantis Auto SAS, 78300 Poissy (FR)
(72) Inventeur: BALENGHIEN, Olivier, 93390 CLICHY SOUS BOIS (FR)
(74) Mandataire: PSIP
(86) Numéro de dépôt international: PCT/FR2023/050437
(87) Numéro de publication internationale: WO 2023/227837

(56) Documents cités:
- WO-A1-2021/141053
- DE-T5- 112020 001 169
- FR-A1- 3 043 604
- US-B2- 11 040 673

## Description

La présente invention revendique la priorité de la demande française N° 2204959 déposée le 24.05.2022.

Le domaine de l'invention concerne un procédé de surveillance du couple moteur d'une machine électrique de traction de véhicule électrifié.

Dans l'industrie automobile, les constructeurs de véhicule intègrent des fonctions de surveillance afin de s'assurer du bon fonctionnement de la machine électrique de traction. En particulier, une de ces fonctions consiste à surveiller en permanence le couple réalisé par le rotor de la machine électrique en le mesurant et en le comparant à la consigne de couple fournie. En cas de détection d'un écart trop important, une alerte est signalée et la machine électrique est reconfigurée dans un mode dégradé.

On connait de l'état de la technique le document brevet FR2904108A1 décrivant un dispositif à faible coût de détermination de caractéristiques de fonctionnement d'un moteur électrique. Il permet notamment de déterminer le sens de rotation d'un moteur et les variations de vitesse ou de couple de fonctionnement. Ce dispositif trouve une application avantageuse pour les moteurs de lève-vitre de véhicule pour détecter le pincement d'un obstacle.

En ce qui concerne la machine électrique de traction, dans une volonté d'optimisation de ses composants et de ses rendements, pour allonger la durée de vie et réduire son coût, on a cherché à optimiser la machine électrique en ce qui concerne les exigences en précision de couple dans le sens de la marche avant du véhicule par rapport au sens de marche arrière. Par conséquent, la précision du couple réalisé par le rotor de la machine de traction en marche avant est supérieure à celle du couple réalisé en marche arrière. Les documents WO 2021/141053 A1, US11040673B2, DE112020001169T5 et FR3043604A1 décrivent des procédés similaires de surveillance du couple du moteur d'un véhicule électrique.

Il existe un besoin d'améliorer la fonction de surveillance du couple réalisé par une machine électrique de traction afin de garantir les meilleures performances et d'augmenter le niveau d'exigence pour le contrôle du couple. Un objectif de l'invention est en outre d'améliorer les diagnostics de défaillances et d'éviter les alertes et reconfigurations intempestives de la machine électrique de traction d'un véhicule automobiles. Un autre objectif est de proposer une machine électrique à moindre coût tout en améliorant les exigences en termes de sécurité de fonctionnement.

Plus précisément, l'invention concerne un procédé de surveillance du couple moteur d'une machine électrique de traction d'un véhicule électrifié comprenant la détermination d'un écart de couple entre une consigne de couple transmise à la machine électrique et un couple réalisé par le rotor de la machine électrique et la détermination si le rotor tourne dans le sens de marche avant du véhicule ou le sens de marche arrière du véhicule. Selon l'invention, le procédé comporte la comparaison de l'écart de couple par rapport à un premier seuil lorsque le rotor tourne dans le sens de marche avant et la comparaison de l'écart de couple par rapport à un deuxième seuil lorsque le rotor tourne dans le sens de marche arrière et l'activation d'une reconfiguration de la machine électrique en fonction du résultat de la comparaison. Le deuxième seuil a une valeur en couple supérieure au premier seuil, ce qui permet de réduire les exigences de conception pour la marche arrière et de réduire le coût de la machine électrique.

Selon une variante, le procédé comporte en outre la commande d'une première reconfiguration de la machine électrique si l'écart est supérieur au premier seuil dans le sens de marche avant pendant au moins une première durée.

Selon une variante, la première durée est égale à 450 millisecondes.

Selon une variante de la première reconfiguration, le procédé comporte la mémorisation d'un premier code défaut dans un premier état, le signalement d'un défaut et l'arrêt de la machine électrique. Le premier état est un état dit permanent.

Selon une variante, le procédé comporte en outre la commande d'une deuxième reconfiguration de la machine électrique si l'écart est supérieur au deuxième seuil dans le sens de marche arrière pendant au moins une deuxième durée.

Selon une variante, la deuxième durée est égale à 100 millisecondes.

Selon une variante de la deuxième reconfiguration, le procédé comporte la mémorisation d'un deuxième code défaut dans le premier état, le signalement d'un défaut et l'arrêt de la machine électrique. Le premier état est un état dit permanent.

Selon une variante, le procédé comporte en outre, en cas d'activation de la première reconfiguration ou de la deuxième reconfiguration et en cas de détection d'une commande d'extinction du véhicule, la commande d'une réhabilitation du fonctionnement de la machine électrique, l'arrêt du signalement et la mémorisation du premier ou du deuxième code défaut dans un deuxième état. Le deuxième état est un état dit fugitif.

Selon une variante, le premier seuil est égal à 50 N.m et le deuxième seuil est égal à 60 N.m

Il est envisagé en outre un véhicule électrifié comportant une machine électrique de traction et une unité de commande de la machine électrique de traction dans lequel l'unité de commande est configurée pour mettre en œuvre le procédé de surveillance selon l'un quelconque des modes de réalisation précédents.

On envisage en outre un produit programme-ordinateur comprenant des instructions qui, lorsque le programme est exécuté par un calculateur de la machine électrique de traction, conduisent celui-ci à mettre en œuvre l'un quelconque des modes de réalisation du procédé de surveillance du couple moteur selon l'invention.

L'utilisation de deux seuils de surveillance du couple de valeurs distinctes, différenciant la marche avant et la marche arrière de la machine électrique, permet d'optimiser la conception de la machine électrique dans le sens de rotation de la machine qui correspond à la marche avant du VHL. Ce procédé de surveillance permet de réduire les coûts de la machine électrique, du fait d'exigences de conception réduites dans le sens de la marche arrière.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente schématiquement un groupe motopropulseur de véhicule automobile électrifié configuré pour mettre en œuvre le procédé selon l'invention.
[Fig.2] représente un mode de réalisation préférentiel du procédé de surveillance selon l'invention.

L'invention s'applique aux véhicules électrifiés, en particulier les véhicules automobiles à motorisation 100% électrique et les véhicules hybrides. L'invention concerne plus précisément un procédé de surveillance du couple de la machine électrique de traction d'un véhicule électrifié.

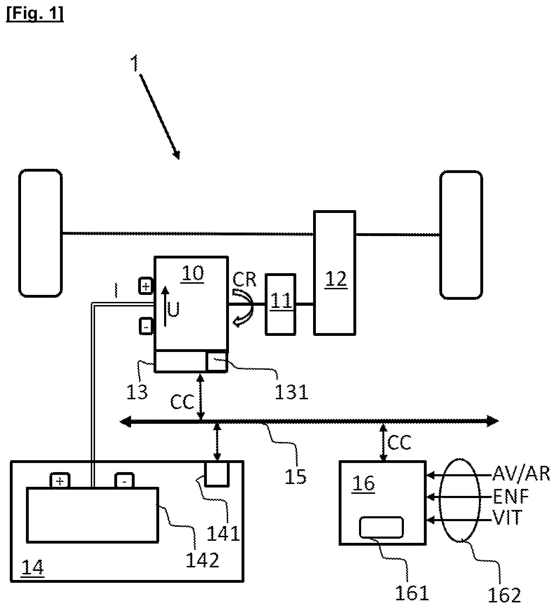

En figure 1, on a représenté schématiquement un exemple de groupe motopropulseur de véhicule électrifié 1 prévu pour mettre en œuvre l'invention. Le groupe motopropulseur 1 comporte une unité de commande 16, désignée par l'acronyme eVCU pour « Electric Vehicule Control Unit » en anglais, superviseur ou l'acronyme ECU pour « Electronic Control Unit », une machine électrique de traction 10 alimentée par un système de batterie de traction 14, et une chaine de traction d'un couple moteur CR transmis par le rotor de la machine électrique 10 vers des roues du véhicule.

Classiquement pour un véhicule à traction 100% électrique, la chaine de traction comporte notamment un réducteur 11 relié mécaniquement en rotation au rotor et une transmission mécanique 12 du couple moteur à chaque roue de traction du véhicule. D'autres architectures de transmission sont envisageables pour le procédé de surveillance selon l'invention, en particulier pour les architectures hybrides.

En outre, il est prévu, mais non représenté sur la figure 1, un chargeur embarqué du système de batterie 14, un boitier de prise de recharge destiné à brancher le véhicule à une source d'alimentation électrique externe, par exemple une prise domestique, station fixe domestique (appelée couramment « Wallbox » en anglais), une borne de recharge d'une station autoroutière prévue à cet effet, ou bien encore une borne de recharge mobile.

Le système de batterie de traction 14 est destiné à l'alimentation électrique de la machine de traction 10 du véhicule. Il comporte des moyens de stockage d'énergie électrique 142. Dans le cadre de l'invention, la tension du système de batterie de traction 14 peut être de type 48V ou supérieure, de type 400 volts selon le mode de réalisation préférentielle (comprise entre 350 volts et 450 volts), de type 800 volts (comprise entre 700 volts et 900 volts), ou voire plus. La batterie 142 comprend des éléments de stockage d'énergie comportant des cellules électrochimiques, par exemple de type Lithium-ion.

Le système de batterie 14 comprend également un calculateur de gestion 141 (désigné par l'acronyme BMS pour « Battery Management System » ou TBCU pour « Traction Battery Control Unit ») adapté pour superviser les paramètres spécifiques à la batterie 142 en coopération avec des capteurs de courant et tension, tels l'état de charge SOC (« State of Charge »), la tension de circuit ouvert OCV (« Open Circuit Voltage ») exprimée en Volt, le courant de charge exprimé en Ampère, l'état de santé SOH (« State of Health), la tension ou bien encore la température de la batterie 142.

Par ailleurs, l'unité de commande de supervision 16 supervise la machine électrique de traction 10, le système de batterie de traction 14, notamment. L'unité de commande 16 a la fonction de centraliser les données collectées du véhicule et de les retransmettre à d'autres calculateurs du véhicule à travers un bus de communication de données 15, par exemple de type CAN.

Plus précisément, le calculateur de supervision 16 détermine en permanence la consigne de couple à réaliser aux roues et la consigne de couple CC à réaliser par la machine électrique 10 en sortie du rotor. Par exemple, la consigne de couple CC est déterminable à partir de la consigne de couple aux roues et de la valeur de la démultiplication du réducteur 11. La consigne de couple CC à réaliser est transmise à travers le bus de communication 15 à la machine électrique de traction 10.

Le calculateur 16 comporte, enregistrée en mémoire, une cartographie 161 délivrant une valeur de consigne de couple à la roue en fonction des paramètres 162 suivant : le sens de marche du véhicule AV/AR à partir d'un capteur du levier de vitesse, l'enfoncement pédale d'accélérateur et de frein ENF et la vitesse du véhicule VIT, reçue par exemple d'un calculateur de contrôle de trajectoire.

Plus précisément, la machine électrique de traction 10 comporte un calculateur 13 à circuits intégrés, de type à microprocesseur et à mémoires, configuré pour le pilotage de la machine électrique 10, désigné par le terme MCU pour « Machine Control Unit » en anglais. La machine électrique de traction 10 est dans cet exemple une machine synchrone à aimant permanent. Le calculateur 13 élabore et transmet une consigne de courant à un convertisseur électrique. La consigne de courant est déterminée à partir d'une cartographie de correspondance enregistrée en mémoire du calculateur 13 délivrant la quantité de courant nécessaire que le convertisseur doit prélever au réseau électrique haute tension en réponse à la consigne de couple demandée, en fonction de la tension du réseau haute tension et de la température du stator de la machine électrique de traction 10. Ce convertisseur prélève le courant sur le réseau de tension alimenté par le système de batterie 14 pour alimenter les pôles du stator de la machine électrique de traction 10.

En particulier, le calculateur 13 comporte un module de surveillance 131 dont la fonction est de mettre en œuvre le procédé de surveillance du couple moteur selon l'invention. Pour son exécution, le module 131 détermine en permanence pendant son fonctionnement le couple réalisé CR. De manière connue en soi, le couple réalisé CR est déterminé à partir de la puissance mécanique Pm fournie à la chaine de transmission par le rotor selon la relation Pm=Cr*W, laquelle puissance Pm est calculable à partir de la puissance électrique Pe en entrée de la machine électrique 10 et d'un coefficient de rendement prédéterminé Rd de la machine électrique 10. Et, W est le régime de rotation instantané du rotor, exprimé par exemple en tr/min.

En particulier, le coefficient de rendement Rd est mesuré sur banc pour chaque pas de régime, de couple, pour chaque pas de tension, pour chaque pas de courant d'alimentation et pour chaque pas de température de stator. Une cartographie des valeurs de Rd est apprise au banc et est enregistrée dans la mémoire du calculateur 13 de sorte que ce dernier puisse déterminer à chaque instant le coefficient Rd lors du fonctionnement de la machine électrique 10.

En outre, le calculateur 13 est apte à déterminer en permanence pendant son fonctionnement, par la mesure ou la réception, les paramètres de fonctionnement suivant : la tension U aux bornes de la machine électrique 10, le courant prélevé I par la machine électrique 10, le régime de rotation W du rotor et la température du stator.

Ainsi, le module de surveillance 131 calcule donc en permanence le couple réalisé CR selon la formule suivante et la cartographie de rendement enregistrée : CR=U*I*Rd/W

En outre, le module de surveillance 131 détermine en permanence pendant son fonctionnement la consigne de couple CC. La consigne de couple CC est reçue par le calculateur 13 à travers le bus de communication 15.

En outre, le module de surveillance 131 détermine en permanence l'écart EC entre le couple réalisé et la consigne de couple CC selon la formule suivante : EC=abs(CR-CC), où abs() est la fonction de valeur absolue. Le module de surveillance 131 est configuré en mémoire par au moins deux seuils de couple S1 et S2, et deux durées prédéterminées D1 et D2, S1 et D1 correspondant spécifiquement à la surveillance du couple en marche avant, et S2 et D2 spécifiquement à la surveillance en marche arrière. S1 est un critère d'acceptabilité d'écart de couple en marche avant et S2 un critère d'acceptabilité d'écart de couple en marche arrière. S2 est supérieur à S1 en valeur de couple car on autorise un écart de couple plus important sur la marche arrière. D1 et D2 sont les durées maximums d'acceptabilité d'un écart EC lorsque cet écart est supérieur à S1 ou S2. D1 et D2 ont des valeurs distinctes.

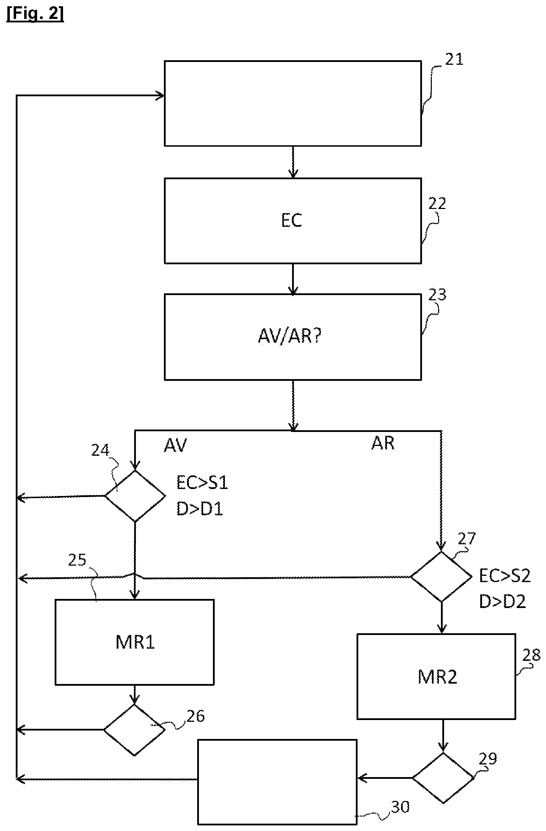

En outre, le module de surveillance 131 est apte à activer une reconfiguration de la machine électrique 10 en cas de détection d'une anomalie de couple en marche avant ou en marche arrière. La reconfiguration consiste à piloter un mode dégradé de la machine électrique. Par exemple, la reconfiguration impose une limite de couple maximum ou empêche complètement la fourniture de couple. Il est prévu selon l'invention au moins deux modes de reconfiguration, un premier mode en marche avant et un deuxième mode en marche arrière. Par ailleurs, chaque mode de reconfiguration est désactivable en fonction de conditions de désactivation spécifiques à chaque mode. Des exemples de conditions seront décrits en figure 2.

Par ailleurs, pour les besoins du procédé de surveillance, l'unité de commande 16 collecte des informations relatives à des anomalies détectées par la machine électrique de traction 10 de manière à les retransmettre à une autre unité de commande centralisée (non représentée en figure 1) désignée par l'acronyme BSI pour Boitier de Servitude Intelligent. Dans cet exemple non limitatif, le boitier BSI et l'unité de commande 16 communiquent à travers un deuxième bus de communication, de type CAN. Plus précisément, le boitier BSI est en charge d'enregistrer un journal de diagnostics et d'alertes consultable par les services après-vente. Une anomalie est enregistrée en mémoire du boitier BSI sous la forme d'un code d'anomalie représentatif du niveau de gravité et de l'état de l'anomalie. Une anomalie peut être enregistrée dans un état permanent (c'est-à-dire que l'anomalie est toujours en cours) ou dans un état fugitif (l'anomalie n'est plus détectée mais l'évènement reste enregistré dans l'historique du journal).

En figure 2, on décrit un diagramme représentant un mode de réalisation préférentiel de l'algorithme du procédé de surveillance du couple moteur d'une machine électrique de traction pour un véhicule électrifié selon l'invention. En référence à la figure 1, le procédé est mis en œuvre par le module de surveillance 131, dans cet exemple le calculateur 13 de la machine électrique 10. Mais ce n'est pas obligatoire, le module de surveillance 131 pourrait être externe au calculateur 13, tout en étant couplé à ce dernier 13. Dans ce dernier cas, il peut être lui-même agencé sous la forme d'un calculateur dédié comprenant un éventuel programme dédié, par exemple. Par conséquent, le module de surveillance, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

Dans une étape initiale 21, le véhicule est démarré et la machine électrique est mise en fonctionnement. Le levier de vitesse est par exemple en position de marche avant ou en position de marche arrière. Le conducteur appuie sur la pédale de frein ou la pédale d'accélérateur. Le véhicule est en déplacement à une vitesse donnée VIT.

A une deuxième étape 22, le module de surveillance 131 calcule l'écart EC entre le couple réalisé CR et la consigne de couple CC. La consigne de couple CC et le couple réalisé CR sont déterminés par le module de surveillance 131 conformément à la description de la figure 1.

A une troisième étape 23, le module de surveillance détermine le sens de marche du véhicule AV/AR de manière à sélectionner la valeur de seuil spécifique au sens de marche parmi les valeurs S1 et S2 enregistrées en mémoire du module de surveillance. Le sens de marche est déterminé de préférence à partir de l'information délivrée par un capteur piézométrique de la machine électrique de traction permettant de détecter le sens de rotation du rotor.

A une quatrième étape 24, le module de surveillance compare l'écart EC avec la valeur S1 si le rotor de la machine électrique tourne dans le sens positif en couple de la marche avant AV. En outre, si l'écart EC est supérieur à S1, le module de surveillance vérifie si cet écart EC reste supérieur à S1 pendant une durée D supérieure à la durée D1. Dans cet exemple non limitatif, S1 est égal à 50 N.m et D1 est égal à 450 millisecondes. D1 peut être égal à des valeurs inférieures ou supérieures.

A une cinquième étape 25, si EC est supérieur à S1 pendant une durée D supérieure à la durée D1, le module de surveillance active un premier mode de reconfiguration MR1 de la machine électrique de traction. Le premier mode de reconfiguration MR1 consiste à mettre à l'arrêt la machine électrique de traction (on empêche la fourniture de couple), à enregistrer un code défaut en mémoire non volatile, dite aussi mémoire morte ou mémoire morte reprogrammable (ROM (« Read-Only Memory » en anglais) ou EPROM (« Erasable Programmable Read-Only Memory »)) et à communiquer ce code défaut vers l'unité de commande eVCU du véhicule à des fins de diagnostic. Ce code défaut est représentatif d'une anomalie de non-respect de la consigne de couple de la machine électrique en marche avant. Par ailleurs, le calculateur de la machine électrique demande d'allumer un voyant « d'arrêt » au tableau de bord et un message signalant aux utilisateurs du véhicule qu'un problème est survenu sur la chaine de traction. Le code défaut est enregistré dans un état dit permanent, indiquant que l'anomalie est présente.

Ce premier mode de reconfiguration MR1 est désactivable à une sixième étape de désactivation 26 lorsqu'une première condition de désactivation est détectée. Le non-respect de la consigne de couple en marche avant est jugé comme une anomalie critique. Par conséquent, la première condition de désactivation est l'intervention d'un service technique sur la machine électrique, incluant la vérification du journal de diagnostic et l'effacement de la mémoire non volatile du calculateur de la machine électrique. Une fois que l'intervention est exécutée, le procédé retourne à l'étape initiale 20 et retourne dans une boucle de vérification.

Par ailleurs, à l'étape 24, tant que l'écart EC reste inférieur au seuil S1 ou est supérieur à S1 durant une durée D inférieure à D1, le procédé retourne à l'étape initiale 20 et retourne dans une boucle de vérification.

De retour à l'étape 23, en cas de détection d'une marche arrière AR, à une septième étape 27, le module de surveillance compare l'écart EC avec la valeur S2. Le rotor de la machine électrique tourne dans le sens négatif en couple de la marche arrière AR. En outre, si l'écart EC est supérieur à S2, le module de surveillance vérifie si cet écart EC reste supérieur à S2 pendant une durée D supérieure à la durée D2. Dans cet exemple non limitatif, S2 est égal à 60 N.m et D2 est égal à 100 millisecondes. S2 est obligatoirement supérieur à S1. D2 peut être égal à des valeurs inférieures ou supérieures.

A une huitième étape 28, si EC est supérieur à S2 pendant une durée D supérieure à la durée D2, le module de surveillance active un deuxième mode de reconfiguration MR2 de la machine électrique. Le deuxième mode de reconfiguration MR2 consiste à mettre à l'arrêt la machine électrique (on empêche la fourniture de couple), à enregistrer un code défaut en mémoire non volatile, et à communiquer ce code défaut vers l'unité de commande eVCU du véhicule à des fins de diagnostic. Ce code défaut est représentatif d'une anomalie de non-respect de la consigne de couple de la machine électrique en marche arrière. Par ailleurs, le calculateur de la machine électrique demande d'allumer un voyant « d'arrêt » au tableau de bord et un message signalant aux utilisateurs du véhicule qu'un problème est survenu sur la chaine de traction. Le code défaut est enregistré dans un état dit permanent, indiquant que l'anomalie est présente. Dans ce mode de réalisation préférentiel, le mode MR2 se différencie du mode MR1 par sa condition 29 de désactivation.

Plus précisément, le deuxième mode de reconfiguration MR2 est désactivable à une neuvième étape de désactivation 29 lorsqu'une deuxième condition de désactivation est détectée. Le non-respect de la consigne de couple en marche arrière est jugé comme moins critique qu'en marche avant. Par conséquent, la deuxième condition de désactivation est une détection de l'évènement d'extinction du véhicule, appelée également « coupure contact » du véhicule par actionnement d'une clé ou bouton d'arrêt/mise en marche du véhicule.

Cette condition dite « coupure contact » autorise la sortie du mode de reconfiguration MR2. Le procédé retourne alors à l'étape initiale 20 et le véhicule est de nouveau autorisé à repartir. Dans ce cas, le calculateur de la machine électrique commande une réhabilitation 30 de la machine électrique consistant à commander l'arrêt de l'allumage du voyant « d'arrêt » et du message d'anomalie, à autoriser le fonctionnement de la machine électrique et à enregistrer dans la mémoire non volatile du calculateur et de l'unité de commande eVCU le code défaut dans un deuxième état dit état fugitif à des fins de diagnostic. L'état fugitif indique que l'anomalie n'est plus existante et a pour fonction d'enregistrer l'évènement pour analyse postérieure. A l'étape initiale 20, le procédé retourne dans une boucle de vérification.

Néanmoins, on envisage en variante que la deuxième condition de désactivation 29 soit l'intervention d'un service technique, identiquement à la première condition 26. Le code défaut reste à l'état permanent et la machine électrique de traction reste à l'arrêt jusqu'à l'intervention technique.

En variante optionnelle, pour ne pas immobiliser le véhicule même en cas de défaut détecté en marche AV, on envisage, à l'étape 26, qu'une détection d'un évènement de commande d'extinction du véhicule, dite « coupure contact », autorise la sortie du mode de reconfiguration MR1. Le procédé retourne alors à l'étape initiale 20 et le véhicule est de nouveau autorisé à repartir. Cette variante, non représentée en figure 1, comporte une étape de réhabilitation de la machine de traction identique à l'étape 30 avant le retour à l'étape initiale 20.

## Revendications

1. Procédé de surveillance du couple moteur d'une machine électrique de traction (10) d'un véhicule électrifié comprenant la détermination (22) d'un écart de couple (EC) entre une consigne de couple (CC) transmise à la machine électrique et un couple réalisé (CR) par le rotor de la machine électrique (10) et la détermination (23) si le rotor tourne dans le sens de marche avant du véhicule ou le sens de marche arrière du véhicule, **caractérisé en ce qu'**il comporte la comparaison (24) de l'écart de couple (EC) par rapport à un premier seuil (S1) lorsque le rotor tourne dans le sens de marche avant et la comparaison (27) de l'écart de couple (EC) par rapport à un deuxième seuil (S2) lorsque le rotor tourne dans le sens de marche arrière et l'activation d'une reconfiguration (25 , 28) de la machine électrique (10) en fonction du résultat de la comparaison (24,27), le deuxième seuil (S2) ayant une valeur supérieure au premier seuil (S1).

2. Procédé de surveillance selon la revendication 1, **caractérisé en ce qu'**il comporte en outre la commande d'une première reconfiguration (25) de la machine électrique (10) si l'écart (EC) est supérieur au premier seuil (S1) dans le sens de marche avant (AV) pendant au moins une première durée (D1).

3. Procédé de surveillance selon la revendication 2, **caractérisé en ce que** la première durée (D1) est égale à 450 millisecondes.

4. Procédé de surveillance selon la revendication 2 ou 3, **caractérisé en ce que** la première reconfiguration (25) comporte la mémorisation d'un premier code défaut dans un premier état, le signalement d'un défaut et l'arrêt de la machine électrique (10).

5. Procédé de surveillance selon l'une quelconque des revendications 1 à 4, **caractérisé en ce qu'**il comporte en outre la commande d'une deuxième reconfiguration (28) de la machine électrique (10) si l'écart (EC) est supérieur au deuxième seuil (S2) dans le sens de marche arrière (AR) pendant au moins une deuxième durée (D2).

6. Procédé de surveillance selon la revendication 5, **caractérisé en ce que** la deuxième durée (D2) est égale à 100 millisecondes.

7. Procédé de surveillance selon la revendication 5 ou 6, **caractérisé en ce que** la deuxième reconfiguration (28) comporte la mémorisation d'un deuxième code défaut dans le premier état, le signalement d'un défaut et l'arrêt de la machine électrique.

8. Procédé de surveillance selon l'une quelconque des revendications 2 à 7, **caractérisé en ce qu'**il comporte en outre, en cas d'activation de la première reconfiguration (25) ou de la deuxième reconfiguration (28) et en cas de détection d'une commande d'extinction du véhicule, la commande d'une réhabilitation (30) du fonctionnement de la machine électrique (10), l'arrêt du signalement et la mémorisation du premier ou du deuxième code défaut dans un deuxième état.

9. Procédé de surveillance selon l'une quelconque des revendications 1 à 8, **caractérisé en ce que** le premier seuil (S1) est égal à 50 N.m et le deuxième seuil (S2) est égal à 60 N.m

10. Véhicule électrifié comportant une machine électrique de traction (10) et une unité de commande (13) de la machine électrique de traction (10) **caractérisé en ce que** l'unité de commande (13) est configurée pour mettre en œuvre le procédé de surveillance selon l'une quelconque des revendications 1 à 9.

## Patentansprüche

1. Verfahren zur Überwachung des Motordrehmoments einer elektrischen Traktionsmaschine (10) eines elektrifizierten Fahrzeugs, umfassend das Bestimmen (22) einer Drehmomentabweichung (EC) zwischen einer an die elektrische Maschine übermittelten Drehmomentvorgabe (CC) und einem vom Rotor der elektrischen Maschine (10) tatsächlich erzeugten Drehmoment (CR) sowie das Bestimmen (23), ob der Rotor in Vorwärtsfahrtrichtung oder in Rückwärtsfahrtrichtung des Fahrzeugs rotiert, **dadurch gekennzeichnet, dass** es den Vergleich (24) der Drehmomentabweichung (EC) mit einem ersten Schwellenwert (S1) umfasst, wenn der Rotor in Vorwärtsfahrtrichtung rotiert, und den Vergleich (27) der Drehmomentabweichung (EC) mit einem zweiten Schwellenwert (S2), wenn der Rotor in Rückwärtsfahrtrichtung rotiert, sowie die Aktivierung einer Rekonfiguration (25, 28) der elektrischen Maschine (10) in Abhängigkeit vom Ergebnis des Vergleichs (24, 27), wobei der zweite Schwellenwert (S2) einen höheren Wert als der erste Schwellenwert (S1) aufweist.

2. Verfahren nach Anspruch 1, **dadurch gekennzeichnet, dass** es ferner das Ansteuern einer ersten Rekonfiguration (25) der elektrischen Maschine (10) umfasst, wenn die Abweichung (EC) in Vorwärtsfahrtrichtung (AV) während mindestens einer ersten Dauer (D1) größer als der erste Schwellenwert (S1) ist.

3. Verfahren nach Anspruch 2, **dadurch gekennzeichnet, dass** die erste Dauer (D1) 450 Millisekunden beträgt.

4. Verfahren nach Anspruch 2 oder 3, **dadurch gekennzeichnet, dass** die erste Rekonfiguration (25) das Speichern eines ersten Fehlercodes in einem ersten Zustand, das Melden eines Fehlers sowie das Abschalten der elektrischen Maschine (10) umfasst.

5. Verfahren nach einem der Ansprüche 1 bis 4, **dadurch gekennzeichnet, dass** es ferner das Ansteuern einer zweiten Rekonfiguration (28) der elektrischen Maschine (10) umfasst, wenn die Abweichung (EC) in Rückwärtsfahrtrichtung (AR) während mindestens einer zweiten Dauer (D2) größer als der zweite Schwellenwert (S2) ist.

6. Verfahren nach Anspruch 5, **dadurch gekennzeichnet, dass** die zweite Dauer (D2) 100 Millisekunden beträgt.

7. Verfahren nach Anspruch 5 oder 6, **dadurch gekennzeichnet, dass** die zweite Rekonfiguration (28) das Speichern eines zweiten Fehlercodes im ersten Zustand, das Melden eines Fehlers sowie das Abschalten der elektrischen Maschine umfasst.

8. Verfahren nach einem der Ansprüche 2 bis 7, **dadurch gekennzeichnet, dass** es ferner, im Fall der Aktivierung der ersten Rekonfiguration (25) oder der zweiten Rekonfiguration (28) und bei Erkennung eines Abschaltbefehls des Fahrzeugs, das Ansteuern einer Wiederfreigabe (30) des Betriebs der elektrischen Maschine (10), das Beenden der Fehlermeldung sowie das Speichern des ersten oder zweiten Fehlercodes in einem zweiten Zustand umfasst.

9. Verfahren nach einem der Ansprüche 1 bis 8, **dadurch gekennzeichnet, dass** der erste Schwellenwert (S1) 50 N·m beträgt und der zweite Schwellenwert (S2) 60 N.m beträgt.

10. Elektrifiziertes Fahrzeug mit einer elektrischen Traktionsmaschine (10) und einer Steuereinheit (13) der elektrischen Traktionsmaschine (10), **dadurch gekennzeichnet, dass** die Steuereinheit (13) dazu ausgelegt ist, das Überwachungsverfahren nach einem der Ansprüche 1 bis 9 auszuführen.

## Claims

1. Method for monitoring the motor torque of an electric traction machine (10) of an electrified vehicle, comprising determining (22) a torque deviation (EC) between a torque setpoint (CC) transmitted to the electric machine and a torque actually produced (CR) by a rotor of the electric machine (10), and determining (23) whether the rotor rotates in a forward driving direction or a reverse driving direction of the vehicle, **characterized in that** it comprises comparing (24) the torque deviation (EC) with a first threshold (S1) when the rotor rotates in the forward driving direction, and comparing (27) the torque deviation (EC) with a second threshold (S2) when the rotor rotates in the reverse driving direction, and activating a reconfiguration (25, 28) of the electric machine (10) depending on a result of the comparison (24, 27), the second threshold (S2) having a value greater than the first threshold (S1).

2. Monitoring method according to claim 1, **characterized in that** it further comprises controlling a first reconfiguration (25) of the electric machine (10) if the deviation (EC) is greater than the first threshold (S1) in the forward driving direction (AV) for at least a first duration (D1).

3. Monitoring method according to claim 2, **characterized in that** the first duration (D1) is equal to 450 milliseconds.

4. Monitoring method according to claim 2 or 3, **characterized in that** the first reconfiguration (25) comprises storing a first fault code in a first state, signaling a fault, and stopping the electric machine (10).

5. Monitoring method according to any one of claims 1 to 4, **characterized in that** it further comprises controlling a second reconfiguration (28) of the electric machine (10) if the deviation (EC) is greater than the second threshold (S2) in the reverse driving direction (AR) for at least a second duration (D2).

6. Monitoring method according to claim 5, **characterized in that** the second duration (D2) is equal to 100 milliseconds.

7. Monitoring method according to claim 5 or 6, **characterized in that** the second reconfiguration (28) comprises storing a second fault code in the first state, signaling a fault, and stopping the electric machine.

8. Monitoring method according to any one of claims 2 to 7, **characterized in that** it further comprises, in the event of activation of the first reconfiguration (25) or the second reconfiguration (28) and upon detection of a vehicle shutdown command, controlling a rehabilitation (30) of operation of the electric machine (10), stopping the signaling, and storing the first or second fault code in a second state.

9. Monitoring method according to any one of claims 1 to 8, **characterized in that** the first threshold (S1) is equal to 50 N·m and the second threshold (S2) is equal to 60 N·m.

10. Electrified vehicle comprising an electric traction machine (10) and a control unit (13) of the electric traction machine (10), **characterized in that** the control unit (13) is configured to implement the monitoring method according to any one of claims 1 to 9.
